# EUROPÄISCHE PATENTSCHRIFT

(11) **EP 0 823 351 B1**
(45) Veröffentlichungstag und Bekanntmachung des Hinweises auf die Patenterteilung: **15.05.2002**
(21) Anmeldenummer: 97111352.7
(22) Anmeldetag: 04.07.1997
(51) Int. Cl.: B60Q 1/10

(54) **Verfahren zum Regeln der Leuchtweite eines Fahrzeugs entsprechend der Beladung**
Method for controlling the light beam depending on the vehicle load
Procédé de commande de la portée des phares en fonction de la charge du véhicule

(30) Priorität: 09.08.1996 DE 19632206
(43) Veröffentlichungstag der Anmeldung: 11.02.1998
(73) Patentinhaber: Bayerische Motoren Werke Aktiengesellschaft, 80788 München (DE)
(72) Erfinder: Kluge, Reinhold, 85399 Halbergmoos (DE); McElfatrick, Wayne, Ota-ku, Tokyo (JP); Bilz, Frank, 80634 München (DE)

(56) Entgegenhaltungen:
- EP-A- 0 699 559
- DE-A- 3 738 221
- US-A- 3 850 041
- US-A- 4 781 465

## Beschreibung

Die Erfindung bezieht sich auf ein Verfahren zum Regeln der Leuchtweite eines Fahrzeugs mit den im Oberbegriff des Patentanspruchs 1 angegebenen Merkmalen.

Ein derartiges Verfahren ist aus der EP 699 559 A bekannt. Dabei wird die Leuchtweite entsprechend der Beladung und dem Anhalteweg verändert. Aus der Abhängigkeit des Anhaltewegs von der Fahrzeuggeschwindigkeit ergibt sich die Abhängigkeit der Leuchtweite von dieser Geschwindigkeit.

Insbesondere bei einer großen Leuchtweite, bei der der Neigungswinkel des Lichtbündels gegenüber der Horizontalen relativ klein ist, können sich bereits kleine Änderungen dieses Neigungswinkels in einer Blendung des Gegenverkehrs bemerkbar. Diese Einflüsse resultieren aus der Wechselwirkung zwischen Fahrbahn und Fahrzeug.

Der Erfindung liegt die Aufgabe zugrunde, ein Verfahren der eingangs genannten Art zu schaffen, durch das eine Anpassung der Leuchtweite auch bei Einflüssen vorgenommen wird, die aus der Wechselwirkung zwischen Fahrbahn und Fahrzeug resultieren.

Die Erfindung löst diese Aufgabe durch die Merkmale des Patentanspruchs 1. Dieses Ziel wird erreicht, indem zusätzlich auch der Zustand und/oder die Oberflächenbeschaffenheit der jeweils befahrenen Straße berücksichtigt wird.

Es wird nunmehr also auch die Fahrbahnbeschaffenheit berücksichtigt. Obwohl Fahrzeuge einen immer mehr verbesserten Federungskomfort besitzen, lassen sich Einflüsse rauer und unebener Fahrbahnen auf die Ausrichtung des Fahrzeugs und damit seiner Scheinwerfer nicht völlig ausschließen. Daraus ergibt sich für die an sich sinnvolle und vorteilhafte Vergrößerung der Leuchtweite bei höheren Geschwindigkeiten durch die Fahrbahnbeschaffenheit ein gegenläufiger Effekt.

Die Leuchtweite von Fahrzeugen ist, wie an sich aus der eingangs genannten Druckschrift bekannt, grundsätzlich innerhalb eines gewissen Toleranzbandes einstellbar. Das Toleranzband wird ausgenutzt, eine gezielte Veränderung der Leuchtweite abhängig von der Fahrzeuggeschwindigkeit vorzunehmen. Voraussetzung dafür ist, die gesamte Verstellung der Leuchtweite innerhalb des Toleranzbandes vorzunehmen.

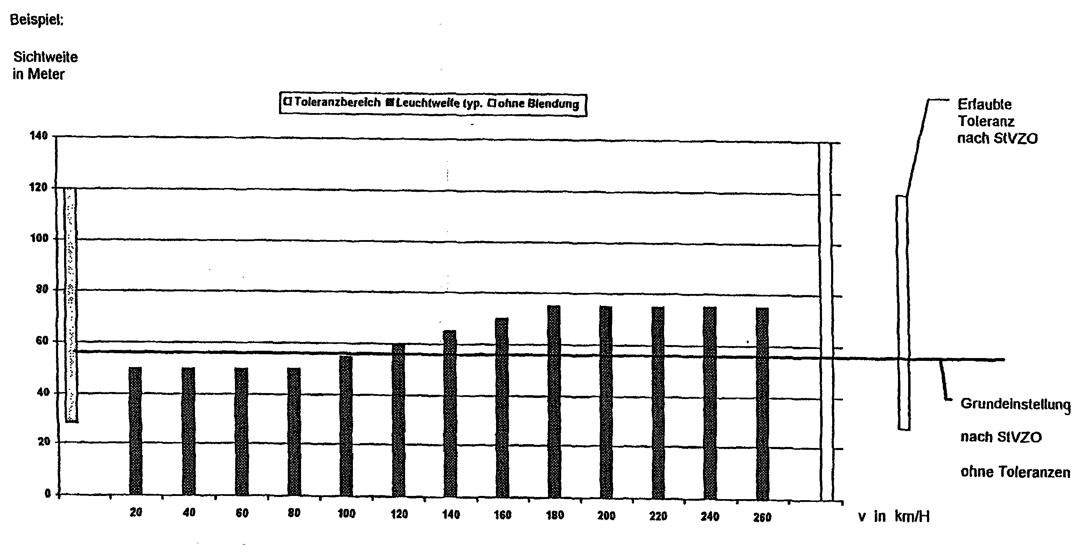

Die Veränderung der Leuchtweite kann kontinuierlich vorgenommen werden. Demgegenüber ergibt sich eine schaltungstechnische Vereinfachung durch eine stufenweise Verstellung der Leuchtweite. Jeder Stufe ist eine spezifische Fahrzeuggeschwindigkeit zugeordnet, über und unter der die Leuchtweite einen definierten, durch die Stufe voneinander getrennten Wert besitzt. Die Anzahl der Stufen kann beliebig sein. Es ist beispielsweise möglich, nur mit einer Stufe zu arbeiten. Es ist aber genauso gut auch möglich, eine Mehrzahl von Stufen zu haben. Ein Beispiel hierfür findet sich in der Zeichnung.

Dabei ist in einem Balkendiagramm die geschwindigkeitsabhängige Einstellung der Leuchtweite als dunkle Balken dargestellt.. Hier wird die Leuchtweite in insgesamt fünf Stufen von 50 bis 75 Meter verstellt. Die repräsentativen Geschwindigkeiten belaufen sich auf kleiner 80, 100, 120, 140, 160 und 180 km/h. Der gesetzlich zulässige Toleranzbereich für eine nach Gesetz vorgeschriebene Grundeinstellung von 55 Metern ist als grauer Balken am linken Rand des Diagramms gezeigt. Er umfaßt Leuchtweiten von 30 bis 120 Metern.

Der Maximalwert der Leuchtweite (120 Meter) liegt um 65 Meter über dem gesetzlich vorgeschriebenen Wert (55 Meter). Für den hier angenommenen maximalen Sollwert der Leuchtweite von 75 Metern ergibt sich unter Berücksichtigung der Toleranz ein maximaler Wert der Leuchtweite von insgesamt 140 (=75+65) Meter und damit gerade noch keine Blendung des Gegenverkehrs.

Bei einem stehenden oder fast stehenden Fahrzeug (die Geschwindigkeit beträgt dann beispielsweise höchstens 2 km/h) kann die Leuchtweite auf einen Wert reduziert werden, der kleiner als die gesetzlich vorgegebene Grundeinstellung von 55 Metern ist. Er kann beispielsweise dann bei 40 Meter liegen. Dieser Wert reicht in aller Regel aus, die Sichtbedürfnisse des Fahrers zu befriedigen und bietet darüber hinaus den Vorteil, Blendungen anderer Verkehrsteilnehmer oder auch das Gefühl, geblendet zu werden, zu vermeiden.

Ferner können auch die Federungseigenschaften des Fahrzeugs berücksichtigt werden. Mit dem zunehmenden Einsatz von geregelten Feder-/Dämpfungssystemen wird es dann möglich, auch bei wechselnden Federungseigenschaften des Fahrzeugs die Leuchtweite stets auf den maximal möglichen Wert einzustellen. Der Wert liegt in der Regel dennoch über dem Grundwert von wie angegeben 50 Metern.

Die Information über den Straßenzustand kann mittels der für die Einstellung der Federungseigenschaften vorgesehenen Sensoren (vgl. DE 3624493 A) gewonnen werden. Dies führt zu einer Verringerung der für die Ausführung der Erfindung erforderlichen Sensorik. Es ist aber auch möglich, die Information über den Straßenzustand auch durch eine eigene Sensorik (DE 3738221 A) oder eine vorhandene andere Sensorik zu gewinnen. Hier zu nennen ist ein Beschleunigungssensor, wie er im Rahmen einer Crasherkennung zum Auslösen eines Airbags u. dgl. eingesetzt wird

Damit wird es möglich, die Leuchtweite optimal den Notwendigkeiten eines modernen Verkehrsgeschehens anzupassen.

## Patentansprüche

1. Verfahren zum Regeln der Leuchtweite eines Fahrzeugs entsprechend der Beladung, bei dem zusätzlich auch die Fahrzeugeigengeschwindigkeit im Sinne einer Vergrößerung/Verkleinerung der Leuchtweite bei einem hohen/niedrigen Geschwindigkeitswert berücksichtigt und der Gesamtbereich der Leuchtweiten-Verstellung innerhalb des Toleranzbands für die Verstellung gehalten wird, **dadurch gekennzeichnet, daß** zusätzlich auch der Zustand und/oder die Oberflächenbeschaffenheit der jeweils befahrenen Straße berücksichtigt und, daß bei einer rauhen und /oder welligen Oberfläche der Straße die Leuchtweite gegenüber einer glatten und ebenen Oberfläche verringert wird.

2. Verfahren nach Anspruch 1,
**dadurch gekennzeichnet, daß** die Leuchtweiten-Verstellung stufenweise bei Über-/Unterschreiten eines jeder Stufe zugeordneten Geschwindigkeitswerts vorgenommen wird.

3. Verfahren nach Anspruch 1 oder 2,
**dadurch gekennzeichnet, daß** die Leuchtweite bei stehendem Fahrzeug auf einen Wert verstellt ist, der kleiner als der Wert bei kleiner Fahrzeuggeschwindigkeit ist.

4. Verfahren nach einem der Ansprüche 1 - 3
**dadurch gekennzeichnet, daß** die jeweiligen Federungseigenschaften des Fahrzeugs zusätzlich berücksichtigt werden.

5. Verfahren nach Anspruch 4,
**dadurch gekennzeichnet, daß** die Information über den Straßenzustand mittels der für die Einstellung der Federungseigenschaften vorgesehenen Sensoren gewonnen wird.

## Claims

1. A method for the control of the headlight beam range of a vehicle corresponding to its loading, in which additionally the vehicle's own speed is taken into account in the sense of an increase/reduction of the headlight beam range for a higher/lower speed value and the overall range of the adjustment of the headlight beam is maintained within the tolerance band for the adjustment, **characterised in that** additionally the state and/or the surface condition of the road currently being traversed is taken into account and that on a rough or wavy road surface the headlight beam range is reduced as opposed to that on a smooth and even road surface.

2. A method according to Claim 1.
**characterised in that** the adjustment of the headlight beam range is made in steps on exceeding or falling below the speed value assigned to each step.

3. A method according to Claim 1 or Claim 2,
**characterised in that** the headlight beam range of a stationary vehicle is adjusted to a value which is smaller than the value at low vehicle speed.

4. A method according to one of the Claims 1 - 3,
**characterised in that** the individual springing characteristics of the vehicle are additionally taken into consideration.

5. A method according to Claim 4,
**characterised in that** the information on the road conditions is obtained by means of the sensors provided for the adjustment of the springing characteristics.

## Revendications

1. Procédé de réglage de la portée des phares d'un véhicule en fonction de la charge, selon lequel, en plus, on tient également compte de la vitesse propre du véhicule dans le sens d'une augmentation/réduction de la portée d'éclairage pour une vitesse élevée/faible, et toute la plage de réglage de la portée d'éclairage est maintenue dans la bande de tolérance des réglages,
**caractérisé en ce qu'**
en plus de l'état et/ou des propriétés de surface de la chaussée parcourue, on tient également compte de la surface chaotique et/ou ondulée de la chaussée, pour diminuer la portée d'éclairage par rapport à une chaussée lisse et à surface plane.

2. Procédé selon la revendication 1,
**caractérisé en ce qu'**
on effectue le réglage de la portée d'éclairage, pas à pas lors du dépassement vers le haut/vers le bas d'un niveau de vitesse associé à chaque étage.

3. Procédé selon les revendications 1 ou 2,
**caractérisé en ce qu'**
on règle la portée d'éclairage lorsque le véhicule est à l'arrêt, sur une valeur inférieure à la valeur de faible vitesse du véhicule.

4. Procédé selon l'une quelconque des revendications 1 à 3,
**caractérisé en ce qu'**
on tient compte en plus des propriétés de suspension respective du véhicule.

5. Procédé selon la revendication 4,
**caractérisé en ce que**
l'information concerne l'état de la chaussée est obtenue à l'aide de capteurs prévus pour régler les propriétés de la suspension.
